# EUROPÄISCHE PATENTSCHRIFT

(11) **EP 0 813 330 B1**
(45) Veröffentlichungstag und Bekanntmachung des Hinweises auf die Patenterteilung: **26.10.2005**
(21) Anmeldenummer: 97401322.9
(22) Anmeldetag: 11.06.1997
(51) Int. Cl.: H04M 3/42, H04Q 3/62

(54) **Verbindungsaufbauverfahren sowie Vermittlungsstelle, Dienstrechner und Kommunikationsnetz**
Connection set-up method and exchange, service processor and communication network
Procédé d'établissement de connexion, central de commutation, processeur de service et réseau de communication

(30) Priorität: 12.06.1996 DE 19623332
(43) Veröffentlichungstag der Anmeldung: 17.12.1997
(73) Patentinhaber: ALCATEL, 75008 Paris (FR)
(72) Erfinder: Krank, Lothar, 71229 Leonberg (DE); Lautenschlager, Wolfgang, 71287 Weissach-Flacht (DE)
(74) Vertreter: Rausch, Gabriele

(56) Entgegenhaltungen:
- US-A- 5 027 341
- US-A- 5 309 028
- BOOM W ET AL: "NEW GROUP FEATURE COLLECTION FOR SOPHO-S ISPBXS" PHILIPS TELECOMMUNICATION REVIEW, Bd. 51 (1993) Dezember, Nr. 3, Seiten 10-16, XP000457193

## Beschreibung

Die Erfindung betrifft ein Verbindungsaufbauverfahren für ein Kommunikationsnetz nach dem Oberbegriff von Anspruch 1, eine Vermittlungsstelle nach dem Oberbegriff von Anspruch 6, einen Dienstrechner für ein Kommunikationsnetz nach dem Oberbegriff von Anspruch 9 sowie ein Kommunikationsnetz nach dem Oberbegriff von Anspruch 10.

Solche gattungsgemäßen Verbindungsaufbauverfahren finden derzeit vor allem im Bereich der Nebenstellenanlagen Verwendung.

Die Erfindung geht von dem Leistungsmerkmal "Heranholen des Rufes" aus, das dem Benutzer von ISDN-fähigen Nebenstellenanlagen zur Verfügung steht und beispielsweise in der Übersichtbeschreibung der Nebenstellenanlage "System 12B, Kommunikationssystem SEL 5630", Ausgabe 3.85, auf der Seite 12 beschrieben ist.

Dieses Leistungsmerkmal erlaubt es, innerhalb einer autorisierten Gruppe die an einem Endgerät ankommenden Rufe von einem anderen Endgerät der Gruppe aus zu übernehmen. Kommt ein Ruf an einem Endgerät der Gruppe an, so wird dieser Ruf beispielsweise durch ein Klingelzeichen angezeigt. Durch Anwahl des Leistungsmerkmales mittels eines anderen Endgerätes der Gruppe ist es daraufhin möglich, den Ruf zu diesem Endgerät heranzuholen. Mit der Durchführung dieser Prozedur erfolgt die sofortige Übernahme des Rufes durch das holende Endgerät, d. h., auf die Anwahl des Leistungsmerkmals wird unmittelbar eine Verbindung zwischen dem rufenden Endgerät und dem holenden Endgerät aufgebaut.

Die Anwendung dieses Verbindungsaufbau-Verfahrens für Endgeräte einer Benutzergruppe bringt jedoch den Nachteil mit sich, daß keinerlei Überprüfung möglich ist, ob die Annahme des Rufes durch ein anderes Endgerät der Benutzergruppe sinnvoll ist.

Weiter beschreibt der Artikel "New group feature collection for SOPHO-S ISPBXs" von Boom W. et al., Philips Telecommunications Review, Band 51 (1993), Nr. 3, Seiten 10 bis 16, XP 000457193 eine Nebenstellenanlage, bei der eine Gruppe von fünf Techniker Anfragen zu zwei unterschiedlichen Produktbereichen sowie allgemeine Anfragen beantworten sollen. Jeder der Gruppenmitglieder überwacht hierbei die drei Service-Nummern auf ankommende Rufe. Jedes Gruppenmitglied kann hierbei auch Rufe behandeln, die an seine individuelle Nummer oder an eine individuelle Nummer eines seiner Kollegen gerichtet ist. Zur Handhabung dieser Rufe verfügt das Gruppenmitglied über ein Endgerät, das über eine Vielzahl von Tasten mit zugeordneten LEDs verfügt, die den anderen Gruppenmitgliedern, den Service-Rufnummern und dem Parken von Rufen zugeordnet sind. Rufe die an ein Gruppenmitglied gerichtet sind, werden an jedem der Endgeräte durch das Blinken eines LEDs angezeigt, das dem spezifischen Gruppenmitglied oder einer Service-Nummer zugeordnet ist. Externe Rufe werden hierbei durch einen höhere Blinkrate angezeigt.

Der Erfindung liegt die Aufgabe zugrunde, einen benutzerfreundlichen Verbindungsaufbau zu Endgeräten zu ermöglichen, die einer Benutzergruppe zugeordnet sind.

Diese Aufgabe wird gelöst durch ein Verbindungsaufbauverfahren für ein Kommunikationsnetz nach der Lehre von Anspruch 1 sowie durch eine Vermittlungsstelle, einen Dienstrechner und ein Kommunikationsnetz nach der Lehre von Anspruch 6, 9 bzw. 10.

Der Erfindung liegt der Gedanke zugrunde, daß Daten über die Herkunft des ankommenden Rufes an ein oder an mehrere Endgeräte der Benutzergruppe gesendet werden, bevor die Annahme des Rufes erfolgt. Hierdurch ist es möglich, durch eine entsprechende Logik im Endgerät oder durch Anzeige dieser Daten eine selektive Annahme von Rufen zu einem anderen Endgerät der Benutzergruppe zu ermöglichen.

Ein weiterer Vorteil der Erfindung ist, daß dadurch auch die Nutzung von bestimmten anderen Leistungsmerkmalen, wie "Eintragen in Anrufliste", möglich ist. Die Nutzung dieser Leistungsmerkmale, zusammen mit dem existierenden Leistungsmerkmal "Heranholen des Rufes" war bisher nicht möglich.

Im folgenden wird die Erfindung anhand dreier Ausführungsbeispiele unter Zuhilfenahme beiliegender Zeichnungen beispielhaft erläutert.
- Fig. 1: zeigt eine symbolische Darstellung einer Kommunikationsumgebung mit einem erfindungsgemäßen Kommunikationsnetz.
- Fig. 2: zeigt ein Blockschaltbild einer Vermittlungsstelle für das Kommunikationsnetz nach Fig. 1.
- Fig. 3: zeigt ein Ablaufdiagramm eines Verbindungsaufbauverfahrens für ein erstes Ausführungsbeispiel.
- Fig. 4: zeigt ein Ablaufdiagramm eines Verbindungsaufbauverfahrens für ein zweites Ausführungsbeispiel.

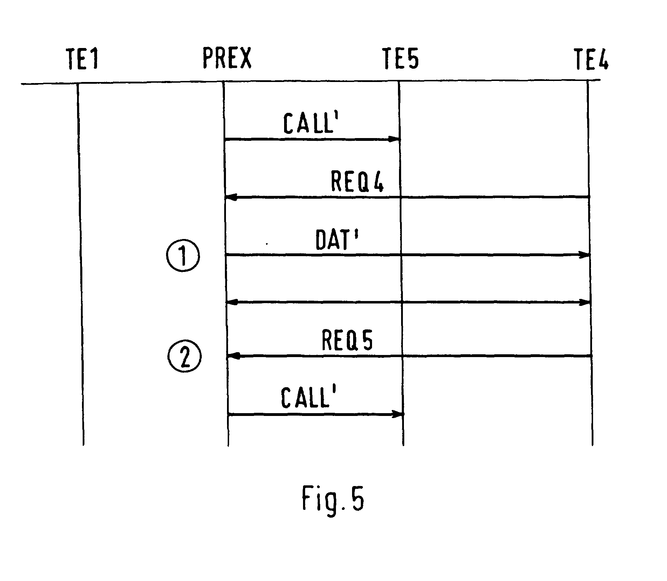

- Fig. 5: zeigt ein Ablaufdiagramm eines Verbindungsaufbauverfahrens für ein drittes Ausführungsbeispiel.

Im ersten Ausführungsbeispiel wird die Durchführung des erfindungsgemäßen Verbindungsaufbauverfahrens in einem erfindungsgemäßen Kommunikationsnetz erläutert, das über eine erfindungsgemäße Vermittlungsstelle verfügt.

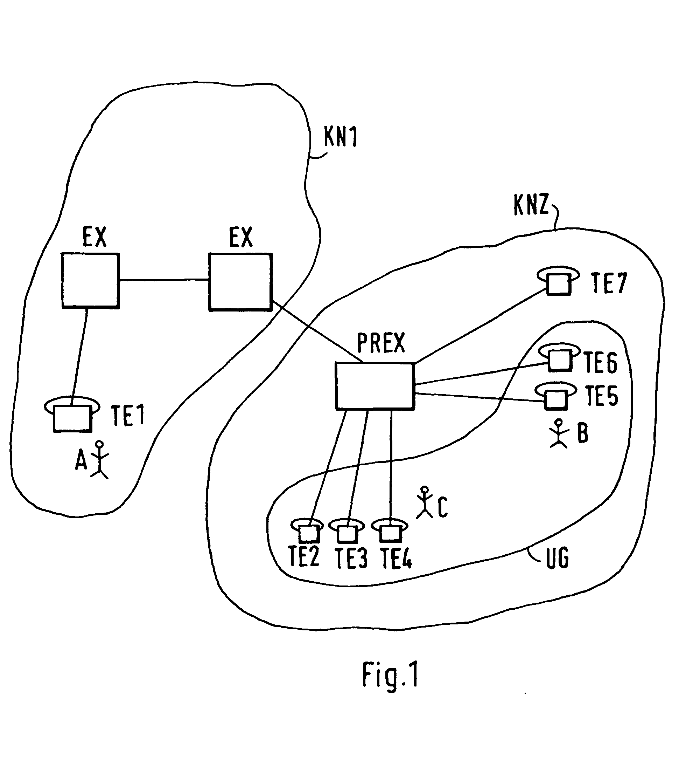

Fig. 1 zeigt eine Kommunikationsumgebung mit zwei Kommunikationsnetzen KN1 und KN2. Das Kommunikationsnetz KN1 weist mehrere Vermittlungsstellen EX und ein Endgerät TE1 auf, das einem Teilnehmer A zugeordnet ist. Das Kommunikationsnetz KN2 weist eine Vermittlungsstelle PREX und sieben Endgeräte TE2 bis TE7 auf. Die Endgeräte TE4 und TE5 sind zwei Teilnehmern C bzw. B zugeordnet.

Das Endgerät TE1 ist über die Vermittlungsstellen EX mit der Vermittlungsstelle PREX verbunden. Die Endgeräte TE2 bis TE7 sind mit der Vermittlungsstelle PREX verbunden. Bei dem Kommunikationsnetz KN1 handelt es sich um ein öffentliches Fernsprechnetz. Die Vermittlungsstellen EX sind dementsprechend Vermittlungsstellen für solch ein öffentliches Fernsprechnetz.

Bei dem Kommunikationsnetz KN2 handelt es sich um ein privates Fernsprechnetz, das mit dem öffentlichen Fernsprechnetz über eine oder mehrere Amtsleitungen verbunden ist. Dementsprechend handelt es sich bei der Vermittlungsstelle PREX um eine private Nebenstellenanlage.

Es ist auch möglich, daß das Kommunikationsnetz KN2 über mehrere Vermittlungsstellen verfügt, die untereinander vermascht sind oder über das öffentliche Kommunikationsnetz KN1 miteinander verbunden sind. Weiter ist es möglich, daß das private Kommunikationsnetz KN2 ein virtuelles privates Kommunikationsnetz ist, das Dienste des öffentlichen Kommunikationsnetzes KN1 für die Kopplung mehrerer physikalischer Kommunikationsnetze zu einem virtuellen Netz verwendet. Es ist auch möglich, daß es sich auch beim Kommunikationsnetz KN2 um ein öffentliches Kommunikationsnetz handelt. Auch könnten zwischen dem Kommunikationsnetz KN1 und KN2 weitere Kommunikationsnetze liegen oder es sich bei dem Kommunikationsnetz KN1 um ein privates Kommunikationsnetz handeln.

Bei den Endgeräten TE1 bis TE7 handelt es sich um analoge Endgeräte mit Display für Fernsprechnetze. Bei den Endgerät TE1 bis TE7 kann es sich auch um ISDN-Endgeräte (ISDN = Integrated Services Digital Network) handeln. Solche Endgeräte sind beispielsweise Telefone, Faxgeräte, aber auch Modems und Schnittstellenkarten für die Datenkommunikation.

Die Endgeräte T2 bis T6 sind einer Benutzergruppe UG zugeordnet. Wählt nun der Teilnehmer A über sein Endgerät TE1 den Teilnehmer B an, so wird eine Verbindungsanforderung von dem Endgerät TE1 über die Vermittlungsstellen EX und PREX an das Endgerät TE5 gesendet. Die Verbindungsanforderung wird dem Endgerät TE5 hierbei von der Vermittlungsstelle PREX durch das Anlegen eines Klingelsignals signalisiert. Sendet nun eines der anderen Endgeräte der Benutzergruppe UG eine Anforderungsnachricht an die Vermittlungsstelle PREX, so sendet sie an dieses Endgerät Daten über das rufende Endgerät TE1. Solche Daten sind beispielsweise die Telefonnummer des Endgerätes TE1, oder eine dem rufenden Endgerät TE1 von der Vermittlungsstelle PREX zugeordnete Bezeichnung.

Es ist auch möglich, daß die Vermittlungsstelle PREX auf andere Weise bestimmt, an welches oder an welche der Endgeräte der Benutzergruppe UG diese Daten gesendet werden. Eine solche Möglichkeit ist, daß die Daten an alle anderen Endgeräte der Benutzergruppe gesendet werden, von denen aus augenblicklich kein Gespräch geführt wird. Auch eine Anzeige an allen Endgeräten, auch bei denen, von denen aus ein Gespräch geführt wird, ist möglich. Eine weitere solche Möglichkeit ist, daß für jedes der Endgeräte TE2 bis TE6 der Benutzergruppe UG in der Vermittlungsstelle PREX eine Liste von Endgeräten abgespeichert ist, an die in solch einem Fall die Daten zu senden sind. Den Elementen solch einer Liste können hierbei auch Prioritäten zugeordnet werden, die eine zeitliche Abfolge des Sendens der Daten ermöglichen.

Nach dem Senden der Daten ist es sodann einem der anderen Endgeräte TE2, TE3, TE4 und TE6 möglich, den Ruf durch Senden einer entsprechenden Steuernachricht an die Vermittlungsstelle PREX heranzuholen.

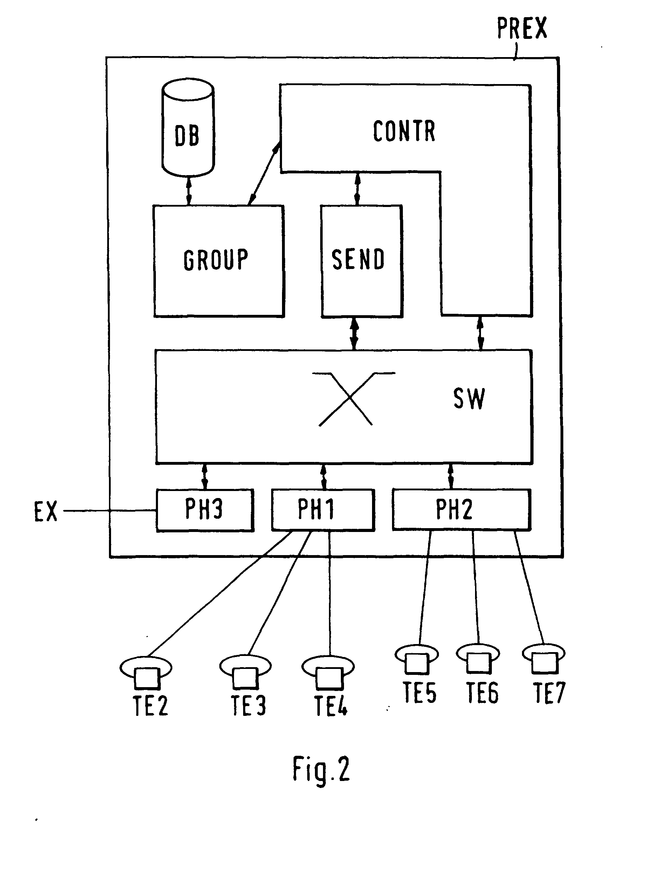

Der genaue Aufbau der Vermittlungsstelle PREX wird nun anhand von Fig. 2 erläutert.

Fig. 2 zeigt die Vermittlungsstelle PREX und die sechs mit dieser verbundenen Endgeräte TE2 bis TE7.

Bei der Vermittlungsstelle PREX handelt es sich, wie bereits oben erläutert, um eine Nebenstellenvermittlung. Es ist jedoch auch möglich, daß es sich um eine Centrex-Vermittlungsstelle handelt, die das erfindungsgemäße Verbindungsaufbauverfahren für die Endgeräte TE2 bis TE6 als zusätzliches Leistungsmerkmal für die Endgeräte des dann virtuellen privaten Netzes KN2 erbringt. Weiter ist es möglich, daß das Kommunikationsnetz KN2 Teil eines öffentlichen Kommunikationsnetzes, beispielsweise des Kommunikationsnetzes KN1, ist. Die Vermittlungsstelle PREX wäre dann eine Vermittlungsstelle dieses öffentlichen Netzes, die mit einer Diensteinheit ausgestattet ist, die diesen Dienst für die Gruppe UG von Endgeräten erbringt.

Die Vermittlungsstelle PREX weist drei Anschlußeinrichtungen PH1 bis PH3, ein Koppelnetz SW, zwei Steuereinheiten GROUP und CONTR, eine Sendeeinheit SEND und eine Speichereinheit DB auf. Die Sendeeinheit SEND und die Anschlußeinheiten PH1 bis PH3 tauschen über das Koppelnetz SW, das von der Steuereinheit CONTR gesteuert wird, Daten aus. Die Speichereinheit DB wird von der Steuereinheit GROUP verwaltet, die ihrerseits wie die Sendeeinheit SEND mit der Steuereinheit CONTR Daten austauscht.

Die Anschlußeinheiten PH1 und PH2 stellen die Schnittstelle zu den Endgeräten TE2 bis TE7 und zu anderen Vermittlungsstellen EX zur Verfügung.

Die Sendeeinheit SEND ermöglicht es der Steuereinheit CONTR, Daten über das Koppelnetz SW und die jeweilige der Anschlußeinheiten PH1 oder PH2 an eines der Endgeräte TE2 bis TE7 zu senden.

Die Steuereinheit CONTR steuert den Aufbau von Verbindungen und stellt Leistungsmerkmale der Vermittlungsstelle PREX bereit. Die Steuereinheit CONTR wird von einer Vielzahl von Steuerprogrammen gebildet, die auf einer oder mehreren Hard- und Software-Plattformen ablaufen.

Die Speichereinheit DB wird von einer Datenbank gebildet. In dieser Datenbank ist die Zuordnung der Endgeräte TE2 bis TE6 zu der Benutzergruppe UG abgespeichert. Es ist hierbei vorteilhaft, daß diese Datenbank auch von anderen Steuerprogrammen der Vermittlungsstelle PREX benutzt wird, beispielsweise zur Verwaltung der Teilnehmerdaten.

Die Steuereinheit GROUP verwaltet den Datensatz der Datenbank DB, der die Zuordnung von Endgeräten zu Benutzergruppen betrifft. Es können eine Vielzahl von solchen Benutzergruppen in der Speichereinheit DB abgespeichert und von der Steuereinheit GROUP verwaltet werden. Die Steuereinheit GROUP verfügt weiter über Algorithmen, die ein schnelles Erkennen einer Zuordnung eines Endgeräts zu einer Benutzergruppe ermöglichen. Die Steuereinheit GROUP wird hierbei analog zur Steuereinheit CONTR vom Steuerprogrammen gebildet.

Wird eine Verbindungsanforderung an die Vermittlungsstelle PREX gerichtet, so wird diese Verbindungsanforderung über eine der Anschlußeinheiten PH1 bis PH3 und das Koppelnetz SW an die Steuereinheit CONTR geleitet, die mittels der Steuereinheit GROUP ermittelt, ob es sich hierbei um eine Verbindungsanforderung zu einem Endgerät der Benutzergruppe UG handelt. Ist dies der Fall und empfängt die Steuereinheit über eine der Anschlußeinheiten PH1 bis PH3 und das Koppelnetz SW eine erste Anforderungssequenz von einem der anderen Endgeräte der Benutzergruppe UG, so veranlaßt sie das Senden von Daten über das rufende Endgerät, indem sie diese Daten an die Sendeeinheit SEND zusammen mit einer entsprechenden Steuernachricht weiterleitet. Hat die Steuereinheit ein solches Senden von Daten veranlaßt und empfängt eine zweite Anforderungssequenz von einem der anderen Endgeräte der Benutzerprogramme UG, so sendet sie eine Steuernachricht an das Koppelnetz SW, das den Aufbau einer Verbindung von dem rufenden Endgerät zu diesem anfordernden Endgerät veranlaßt.

Es ist auch möglich, daß die Steuerung des Verbindungsaufbauverfahrens und damit die Bereitstellung dieses Leistungsmerkmals nicht durch die Steuerung einer Vermittlungsstelle erfolgt, sondern von einem Dienstrechner insbesondere zentral für mehrere Vermittlungsstellen erbracht wird. Bei solch einem Dienstrechner kann es sich beispielsweise um eine Dienststeuereinrichtung (SCP = Service Control Point) im Rahmen des IN-Konzepts (IN = Intelligent Network) handeln. Ein solcher Dienstrechner würde die Funktionsgruppen DB, GROUP und CONTR der Vermittlungsstelle PREX und eine entsprechende Schnittstelleneinheit enthalten, die die Verbindung und Kommunikation mit den an diesen Dienstrechner angeschlossenen Vermittlungsstellen bereitstellt. Das Senden von Daten an Endgeräte der Benutzergruppe würde hierbei indirekt dadurch erfolgen, daß eine Dienstsvermittlungstelle auf eine Steuernachricht von der Dienststeuereinrichtung die Daten sendet. Eine derartige Bereitstellung der Steuerung des Verbindungsaufbauverfahrens hat hierbei den Vorteil, daß die Funktion des Dienstrechners nur einmal für mehrere Vermittlungsstellen bereitgestellt werden muß und es möglich ist, Benutzergruppen aus Endgeräten zu bilden, die mit verschiedenen Vermittlungsstellen verbunden sind. Dies ist insbesondere bei Verwendung eines virtuellen privaten Netzes von Vorteil.

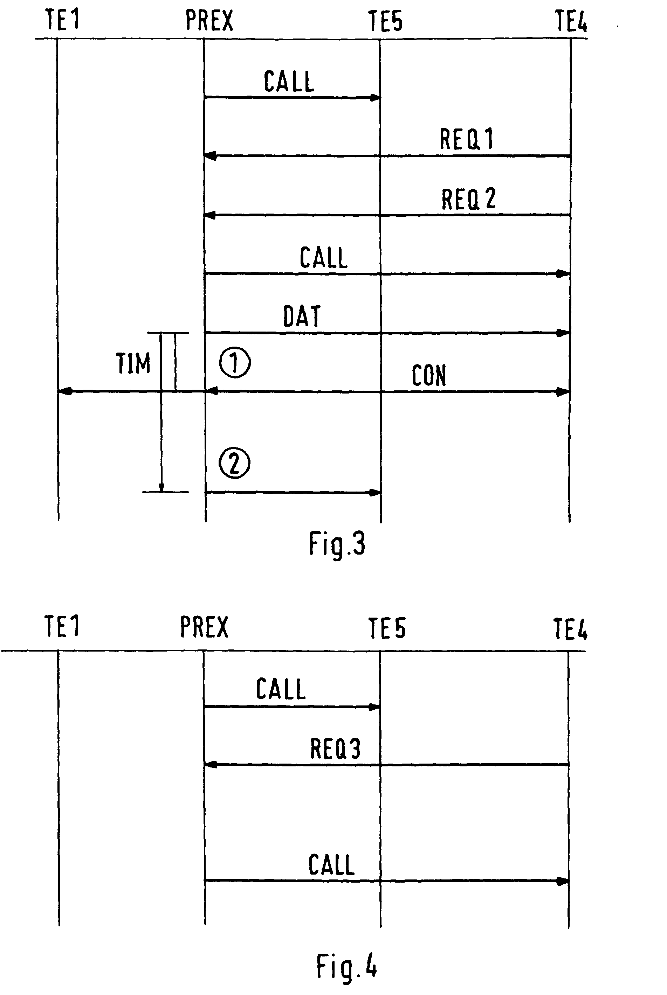

Anhand von Fig. 3 wird nun ein mögliches Verbindungsaufbauverfahren für den Fall beschrieben, in dem es sich bei den Endgeräten TE2 bis TE6 um analoge Endgeräte mit Display handelt.

Die Vermittlungsstelle PREX signalisiert dem Endgerät TE5 durch eine Signalisierungsnachricht CALL, daß vom Endgerät TE1 eine Verbindungsanforderung an sie gerichtet worden ist. Der Teilnehmer C fordert nun über sein Endgerät TE4 das Senden von Informationen über diesen ankommenden Ruf an. Hierfür hebt er den Hörer ab und wählt eine Kennung, die als Anforderung REQ1 vom Endgerät TE4 an die Vermittlungsstelle PREX signalisiert wird. Anschließend legt er auf, wodurch eine Anforderung REQ2 an die Vermittlungsstelle PREX signalisiert wird. Durch die Signalisierung der Anforderungen REQ1 und REQ2 erkennt die Vermittlungsstelle PREX, daß die Daten angefordert werden. Die Vermittlungsstelle PREX signalisiert sodann einen Ruf an das Endgerät TE4 und sendet parallel dazu eine Nachricht DAT an das Endgerät TE4, die die Daten beinhaltet. Die Daten werden sodann vom Endgerät TE4 angezeigt.

Es ist auch möglich, daß die Daten in Form einer Sprachansage an das Endgerät TE4 gesendet werden. In diesem Fall braucht das Endgerät TE4 nicht über einen Display zu verfügen.

Mit dem Senden der Nachricht DAT wird in der Vermittlungsstelle PREX ein Timer gestartet. Entscheidet der Teilnehmer C sich innerhalb einer Zeitdauer TIM dafür, den Ruf anzunehmen, und hebt den Hörer ab (1), so wird der Aufbau einer Verbindung CON zwischen den Endgeräten TE1 und TE4 von der Vermittlungsstelle PREX veranlaßt. Erfolgt keine Annahme des Rufes innerhalb der Zeitdauer TIM (2), so wird das Signalisieren eines Rufes an das Endgerät TE4 gestoppt und der Ruf erneut an das Endgerät TE5 signalisiert.

Anhand von Fig. 4 wird nun eine weitere Möglichkeit des Verbindungsaufbaus für den Fall erläutert, in dem es sich bei den Endgeräten TE2 bis TE6 um analoge Endgeräte mit Display handelt.

Das Verbindungsaufbauverfahren wird beim zweiten Ausführungsbeispiel wie beim ersten Ausführungsbeispiel mit folgenden Abänderungen durchgeführt: Auf die Signalisierung des Rufes CALL an das Endgerät TE5 durch die Vermittlungsstelle PREX werden die Informationen vom Endgerät TE4 durch eine Anforderungssequenz REQ3, die beispielsweise aus Abheben, Senden einer Modemsequenz und anschließendes Auflegen besteht, angefordert. Daraufhin wird der Ruf CALL an das Endgerät TE4 signalisiert. Auch die Rückgabe, d. h. falls der Ruf nicht angenommen werden soll, erfolgt hierbei über Signalisierung (z. B. ebenfalls mittels einer Modemsequenz). Damit kann der Timer in der Vermittlungsstelle PREX entfallen.

In einem dritten Ausführungsbeispiel wird das Verbindungsaufbauverfahren für den Fall erläutert, daß es sich bei den Endgeräten TE2 bis TE6 um ISDN-Endgeräte handelt. In diesem Fall erfolgt der Austausch von Signalisierungsnachrichten zwischen der Vermittlungsstelle PREX und den Endgeräten TE2 bis TE6 über einen speziellen Signalisierungskanal (D-Kanal).

Die Vermittlungsstelle PREX signalisiert einen Ruf CALL' über den Signalisierungskanal an das Endgerät TE5 und zeigt damit eine Verbindungsanforderung von dem rufenden Endgerät TE1 zu dem Endgerät TE5 an. Um Informationen über die Herkunft des an dem Endgerät TE5 anliegenden Rufes zu erhalten, sendet das Endgerät TE4 eine Anforderungsnachricht REQ4 über den Signalisierungskanal an die Vermittlungsstelle PREX. Die Vermittlungsstelle PREX sendet sodann eine Nachricht DAT' mit Daten über das rufende Endgerät TE1 an das Endgerät TE4. Hebt der Teilnehmer C ab, so wird automatisch eine Verbindung zwischen den Endgeräten TE1 und TE4 aufgebaut. Es ist auch möglich, daß hierbei der Verbindungsaufbau durch Senden einer entsprechenden Anforderungsnachricht über den Signalisierungskanal veranlaßt wird. Hat der Teilnehmer C nicht die Absicht, den Ruf anzunehmen, so wird durch sein Endgerät eine Nachricht REQ5 an die Vermittlungsstelle PREX gesendet, worauf diese erneut die Signalisierung des Rufes CALL' an das Endgerät TE5 veranlaßt.

Es ist auch möglich, daß gleichzeitig mit dem Senden der Nachricht DAT' die Ankunft eines Rufes CALL' an das Endgerät TE4 signalisiert wird.

## Patentansprüche

1. Verbindungsaufbauverfahren für ein Kommunikationsnetz (KN2), in dem zwei oder mehr Endgeräte (TE2 bis TE6) einer Benutzergruppe (UG) zugeordnet sind, wobei das Verfahren folgende Schritte umfaßt:
- eine Verbindungsanforderung (CALL) wird von einem rufenden Endgerät (TE1) an ein gerufenes Endgerät (TE5) gerichtet, das der Benutzergruppe (UG) zugeordnet ist und
- auf Anforderung von dem anderen Endgerät oder von einem der anderen Endgeräte (TE2, TE3, TE4, TE6) der Benutzergruppe (UG) wird eine Verbindung (CON) zwischen dem rufenden Endgerät (TE1) und dem anfordernden Endgerät (TE4) aufnehaut, wobei vor dem Aufbau der verbinding (CON) zwischen dem rufenden Endgerät (TE1) und dem anfordernden Endgerät (TE4) Daten (DAT, DAT'), die das rufende Endgerät (TE1) bestimmen nämlich die Rufnummer des rufenden Endgeräts, an das andere Endgerät oder an mindestens eines der anderen Endgeräte (TE2, TE3, TE4, TE6) der Benutzergruppe (UG) gesendet werden.

2. Verfahren nach Anspruch 1, **dadurch gekennzeichnet, daß** die Daten, die das rufende Endgerät bestimmen, an alle nicht belegten Endgeräte der Benutzergruppe gesendet werden.

3. Verfahren nach Anspruch 1, **dadurch gekennzeichnet, daß** die Daten (DAT, DAT'), die das rufende Endgerät (TE1) bestimmen, auf Anforderung an das andere Endgerät oder an eines der anderen Endgeräte (TE2, TE3, TE4, TE6) gesendet werden.

4. Verfahren nach einem der Ansprüche 1 bis 3, **dadurch gekennzeichnet, daß** die Daten (DAT, DAT') über das rufende Endgerät (TE1) von einem Endgerät (TE4) der Benutzergruppe angezeigt werden, an das die Daten gesendet worden sind.

5. Verfahren nach Anspruch 4, **dadurch gekennzeichnet, daß** die Daten (DAT) für eine bestimmte Zeitdauer (TIM) an dem oder an jedem Endgerät (TE4) angezeigt werden.

6. Vermittlungsstelle (PREX) mit mindestens einer Schnittstelleneinheit (PH1, PH2) zum Anschluß einer Vielzahl von Endgeräten (TE2 bis TE7), mit Mitteln (DB) zum Zuordnen von zwei oder mehr Endgeräten (TE2 bis TE6) zu einer Benutzergruppe (UG), mit Mitteln (GROUP) zum Erkennen einer Verbindungsanforderung (CALL), die von einem rufenden Endgerät (TE1) an ein gerufenes Endgerät (TE5) gerichtet ist, das der Benutzergruppe (UG) zugeordnet ist, und mit einer Einheit (CONTR) zur Verbindungssteuerung, die so ausgestaltet ist, daß sie, wenn eine solche Verbindungsanforderung (CALL) erkannt wird, auf Anforderung von dem anderen Endgerät oder von einem der anderen Endgeräte der Benutzergruppe (UG) den Aufbau einer Verbindung (CON) zwischen dem anfordernden Endgerät (TE4) und dem rufenden Endgerät (TE1) veranlaßt,
wobei die Vermittlungsstelle (PREX) über Mittel (SEND) zum Senden von Daten an Endgeräte verfügt und die Einheit (CONTR) zur Verbindungssteuerung so ausgestaltet ist, daß sie vor dem Aufbau der Verbindung (CON) zwischen dem rufenden Endgerät (TE1) und dem anfordernden Endgerät (TE4) das Senden von Daten (DAT, DAT'), die das rufende Endgerät (TE1) bestimmen nämlich die Rufnummer des rufenden Endgeräts, an das andere Endgerät oder an mindestens eines der anderen Endgeräte (TE2, TE3, TE4, TE6) der Benutzergruppe (UG) veranlaßt.

7. Vermittlungsstelle nach Anspruch 6, **dadurch gekennzeichnet, daß** die Vermittlungsstelle (PREX) eine Nebenstellen-Vermittlung ist.

8. Vermittlungsstelle nach Anspruch 6, **dadurch gekennzeichnet, daß** die Vermittlungsstelle eine Centrex-Vermittlungsstelle ist.

9. Dienstrechner für ein Kommunikationsnetz mit einer Schnittstelle zum Anschluß an mindestens eine Vermittlungsstelle, mit Mitteln zum Zuordnen von zwei oder mehr Endgeräten zu einer Benutzergruppe, mit Mitteln zum Erkennen einer Verbindungsanforderung, die von einem rufenden Endgerät an ein gerufenes Endgerät gerichtet ist, das der Benutzergruppe zugeordnet ist, und mit einer Einheit zur Verbindungssteuerung, die so ausgestaltet ist, daß sie, wenn eine solche Verbindungsanforderung erkannt wird, auf Anforderung von dem anderen Endgerät oder von einem de anderen Endgeräte der Benutzergruppe den Aufbau einer Verbindung zwischen dem anfordernden Endgerät und dem rufenden Endgerät veranlaßt,
wobei der Dienstrechner über Mittel zum Senden von Daten an Endgeräte verfügt und die Einheit zur Verbindungssteuerung so ausgestaltet ist, daß sie vor dem Aufbau der Verbindung zwischen dem anfordernden Endgerät und dem rufenden Endgerät das Senden von Daten, die das rufende Endgerät bestimmen nämlich die Rufnummer des rufenden Endgeräts, an das andere Endgerät oder an mindestens eines der anderen Endgeräte der Benutzergruppe veranlaßt.

10. Kommunikationsnetz (KN2) mit einer Diensterbringungseinheit (PREX), die so ausgestaltet ist, daß sie den Verbindungsaufbau zu Endgeräten des Kommunikationsnetzes gemäß dem Verbindungsaufbauverfahren nach Anspruch 1 steuert.

## Claims

1. Connection setup method for a communications network (KN2), in which two or more terminals (TE2 to TE6) are assigned to a user group (UG), the method including the following steps:
- a call request (CALL) is sent from a calling terminal (TE1) to a called terminal (TE5), which is assigned to the user group (UG) and
- on request from the other terminal or from one of the other terminals (TE2, TE3, TE4, TE6) of the user group (UG), a connection (CON) is set up between the calling terminal (TE1) and the requesting terminal (TE4),
data (DAT, DAT') that determines the calling terminal (TE1), namely the call number of the calling terminal, being sent to the other terminal or to at least one of the other terminals (TE2, TE3, TE4, TE6) of the user group (UG) before the connection (CON) is set up between the calling terminal (TE1) and the requesting terminal (TE4).

2. Method according to Claim 1, **characterized in that** the data that determines the calling terminal is sent to all terminals in the user group which are not busy.

3. Method according to Claim 1, **characterized in that** the data (DAT, DAT') that determines the calling terminal (TE1) is sent on request to the other terminal or to one of the other terminals (TE2, TE3, TE4, TE6).

4. Method according to one of Claims 1 to 3, **characterized in that** the data (DAT, DAT') about the calling terminal (TE1) is displayed by a user group terminal (TE4) to which the data has been sent.

5. Method according to Claim 4, **characterized in that** the data (DAT) is displayed for a certain period of time (TIM) on the terminal or on each terminal (TE4).

6. Switching centre (PREX) with at least one interface unit (PH1, PH2) for connection of a large number of terminals (TE2 to TE7), with means (DB) for assigning two or more terminals (TE2 to TE6) to a user group (UG), with means (GROUP) for detecting a call request (CALL), which is directed from a calling terminal (TE1) to a called terminal (TE5), which is assigned to the user group (UG), and with a unit (CONTR) for call control, which is designed in such a way that if such a call request (CALL) is detected, then on request from the other terminal or from one of the other terminals of the user group (UG), the call control unit triggers the setup of a connection (CON) between the requesting terminal (TE4) and the calling terminal (TE1),
the switching centre (PREX) having means (SEND) for sending data to terminals, and the unit (CONTR) for call control being designed in such a way that before the setup of the connection (CON) between the calling terminal (TE1) and the requesting terminal (TE4), the call control unit triggers the sending of data (DAT, DAT') that determines the calling terminal (TE1), namely the call number of the calling terminal, to the other terminal or to at least one of the other terminals (TE2, TE3, TE4, TE6) of the user group (UG).

7. Switching centre according to Claim 6, **characterized in that** the switching centre (PREX) is an extension switching facility.

8. Switching centre according to Claim 6, **characterized in that** the switching centre is a Centrex switching centre.

9. Server for a communications network with an interface for connection to at least one switching centre, with means for assigning two or more terminals to a user group, with means for detecting a call request that is directed from a calling terminal to a called terminal, which is assigned to the user group, and with a unit for call control, which is designed in such a way that, if such a call request is detected, then on request from the other terminal or from one of the other terminals of the user group, the call control unit triggers the setup of a connection between the requesting terminal and the calling terminal,
the server having means for sending data to terminals, and the unit for call control being designed in such a way that before the setup of the connection between the requesting terminal and the calling terminal, the call control unit triggers the sending of data that determines the calling terminal, namely the call number of the calling terminal, to the other terminal or to at least one of the other terminals of the user group.

10. Communications network (KN2) with a service unit (PREX), which is designed in such a way that it controls the connection setup to terminals of the communications network as in the connection setup method according to Claim 1.

## Revendications

1. Procédé d'établissement de connexion pour un réseau de communication (KN2), dans lequel deux terminaux ou plus (TE2 à TE6) sont attribués à un groupe d'utilisateurs (UG), le procédé comprenant les étapes suivantes :
- une demande de connexion (CALL) est adressée par un terminal (TE1) appelant à un terminal (TE5) appelé, qui est attribué au groupe d'utilisateurs (UG) et
- à la demande de l'autre terminal ou de l'un des autres terminaux (TE2, TE3, TE4, TE6) du groupe d'utilisateurs (UG), une connexion (CON) est établie entre le terminal (TE1) appelant et le terminal (TE4) demandeur,
des données (DAT, DAT'), qui déterminent le terminal (TE1) appelant, c'est-à-dire le numéro d'appel du terminal appelant, sont envoyées avant l'établissement de la connexion (CON) entre le terminal (TE1) appelant et le terminal (TE4) demandeur à l'autre terminal ou à au moins l'un des autres terminaux (TE2, TE3, TE4, TE6) du groupe d'utilisateurs (UG).

2. Procédé selon la revendication 1, **caractérisé en ce que** les données, qui déterminent le terminal appelant, sont envoyées à tous les terminaux non occupés du groupe d'utilisateurs.

3. Procédé selon la revendication 1, **caractérisé en ce que** les données (DAT, DAT'), qui déterminent le terminal (TE1) appelant, sont envoyées sur demande à l'autre terminal ou à l'un des autres terminaux (TE2, TE3, TE4, TE6).

4. Procédé selon l'une quelconque des revendications 1 à 3, **caractérisé en ce que** les données (DAT, DAT') concernant le terminal (TE1) appelant sont affichées par un terminal (TE4) du groupe d'utilisateurs auquel les données ont été envoyées.

5. Procédé selon la revendication 4, **caractérisé en ce que** les données (DAT) sont affichées pour une durée (TIM) définie sur le ou sur chaque terminal (TE4).

6. Central de commutation (PREX) comprenant au moins une unité d'interface (PH1, PH2) pour le raccordement d'une pluralité de terminaux (TE2 à TE7), des moyens (DB) pour l'attribution de deux terminaux ou plus (TE2 à TE6) à un groupe d'utilisateurs (UG), des moyens (GROUP) pour la détection d'une demande de connexion (CALL), qui est adressée par un terminal (TE1) appelant à un terminal (TE5) appelé, qui est attribué au groupe d'utilisateurs (UG), et une unité (CONTR) pour la commande de connexion, qui est conçue de telle sorte que, lorsqu'une telle demande de connexion (CALL) est détectée, elle ordonne à la demande de l'autre terminal ou de l'un des autres terminaux du groupe d'utilisateurs (UG) l'établissement d'une connexion (CON) entre le terminal (TE4) demandeur et le terminal (TE1) appelant,
le central de commutation (PREX) disposant de moyens (SEND) pour l'envoi de données à des terminaux et l'unité (CONTR) pour la commande de connexion étant conçue de telle sorte que, avant l'établissement de la connexion (CON) entre le terminal (TE1) appelant et le terminal (TE4) demandeur, il demande l'envoi de données (DAT, DAT'), qui déterminent le terminal (TE1) appelant, c'est-à-dire le numéro d'appel du terminal appelant, à l'autre terminal ou à au moins l'un des autres terminaux (TE2, TE3, TE4, TE6) du groupe d'utilisateurs (UG).

7. Central de commutation selon la revendication 6, **caractérisé en ce que** le central de commutation (PREX) est un central téléphonique privé.

8. Central de commutation selon la revendication 6, **caractérisé en ce que** le central de commutation est un central téléphonique Centrex.

9. Ordinateur de service pour un réseau de communication avec une interface pour le raccordement à au moins un central de commutation, avec des moyens pour l'attribution de deux terminaux ou plus à un groupe d'utilisateurs, avec des moyens pour la détection d'une demande de connexion qui est adressée par un terminal appelant à un terminal appelé, lequel est attribué au groupe d'utilisateurs, et avec une unité pour la commande de connexion, qui est conçue de telle sorte que, lorsqu'une telle demande de connexion est détectée, elle ordonne à la demande de l'autre terminal ou de l'un des autres terminaux du groupe d'utilisateurs l'établissement d'une connexion entre le terminal demandeur et le terminal appelant,
l'ordinateur de service disposant de moyens pour l'envoi de données à des terminaux et l'unité pour la commande de connexion étant conçue de telle sorte que, avant l'établissement de la connexion entre le terminal demandeur et le terminal appelant, elle ordonne l'envoi de données qui déterminent le terminal appelant, c'est-à-dire le numéro d'appel du terminal appelant, à l'autre terminal ou à au moins l'un des autres terminaux du groupe d'utilisateurs.

10. Réseau de communication (KN2) avec une unité de prestation de services (PREX), qui est conçue de sorte qu'elle commande l'établissement de connexion avec des terminaux du réseau de communication selon le procédé d'établissement de connexion selon la revendication 1.
